Europäisches Patentamt

European Patent Office

Office européen des brevets

(19)

(11) Veröffentlichungsnummer: **0 275 969 B1**

## (12) EUROPÄISCHE PATENTSCHRIFT

(45) Veröffentlichungstag der Patentschrift: **18.09.91**

(21) Anmeldenummer: **88100680.3**

(22) Anmeldetag: **19.01.88**

(51) Int. Cl.⁵: **F04B 49/08**, F15B 11/05, G05D 7/06, G05D 16/20

(54) Steuervorrichtung fuer ein hydrostatisches Getriebe fuer wenigstens zwei Verbraucher.

(30) Priorität: **23.01.87 DE 3702002**

(43) Veröffentlichungstag der Anmeldung:
**27.07.88 Patentblatt 88/30**

(45) Bekanntmachung des Hinweises auf die
Patenterteilung:
**18.09.91 Patentblatt 91/38**

(84) Benannte Vertragsstaaten:
**DE FR GB IT SE**

(56) Entgegenhaltungen:
**EP-A- 0 144 788**
**EP-A- 0 164 602**
**DE-A- 3 401 775**
**DE-A- 3 508 432**
**FR-A- 2 548 290**

(73) Patentinhaber: **Hydromatik GmbH**
**Glockeraustrasse 2**
**W-7915 Elchingen 2(DE)**

(72) Erfinder: **Reistle, Wolfgang**
**Gartenstrasse 20**
**W-7907 Hörvelsingen(DE)**
Erfinder: **Wachs, Ewald**
**Kastellstrasse 15**
**W-7901 Illerkirchberg(DE)**
Erfinder: **Wagenseil, Ludwig**
**Reiherstrasse 20**
**W-7917 Vöhringen(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W. Kör-**
**ber Dipl.Ing. J. Schmidt-Evers Dipl.-Ing. W.**
**Melzer Steinsdorfstrasse 10**
**W-8000 München 22(DE)**

## Beschreibung

Die Erfindung bezieht sich auf eine Steuervorrichtung nach dem Oberbegriff des Anspruchs 1.

Bei einer Steuervorrichtung dieser Art handelt es sich um eine sogenannte "Load-Sensing"-Steuerung, bei der der zu jedem Verbraucher gelangende Fördermengenteilstrom mittels eines druckbeaufschlagten Förderstromreglers in Abhängigkeit vom Öffnungsquerschnitt des zugehörigen Steuerventils bemessen wird. Dabei wird die Fördermengeneinstellung der Pumpe in Abhängigkeit von den Verbraucherlasten eingestellt, die der Verstellvorrichtung der Pumpe mittels Lastdruck-Rückführungsleitungen übermittelt werden.

Es ist es üblich, die Förderstromregler durch sogenannte Druckwaagen zu bilden, die bei Gewährleistung einer konstanten Druckdifferenz von 10 bis 20 bar die Förderstromregelung übernehmen. Bei diesem "Load-Sensing"-Prinzip erfolgt somit die Fördermengenverstellung mit einer Druckdifferenz von ca. 10 bis 20 bar zu den Lastdruckwerten, was zu Schwingungsproblemen führen kann. Die vorgenannte obere Grenze der Druckdifferenz ist bezogen auf übliche Lastdruckwerte von 400 bar.

Der Erfindung liegt die Aufgabe zugrunde, eine Steuervorrichtung der eingangs bezeichneten Art bei Gewährleistung einer präzisen Steuerung zu vereinfachen.

Diese Aufgabe wird durch die kennzeichnenden Merkmale des Anspruchs 1 gelöst.

Bei der erfindungsgemäßen Ausgestaltung ist die Summe der einzelnen Verbraucherforderungen stets größer als der von der Pumpe gelieferte Förderstrom. Diese Unterversorgung bewirkt, daß die Druckwaage des höchst belasteten Verbrauchers gegebenenfalls ganz öffnet und dadurch nicht nur die Druckdifferenz zwischen dem Pumpendruck und dem Lastdruck, sondern auch Leistungsverluste verringert werden können. Wenn bei der erfindungsgemäßen Ausgestaltung die Verbraucherforderungen größer sind, als der erfindungsgemäß eingestellte Pumpenförderstrom, oder wenn eine Leistungsregelung eingreift, werden alle Förderteilströme anteilig zurückgenommen, so daß alle Verbraucher mit reduzierter Fördermenge weiterversorgt werden. Bei Verbrauchsforderung Null wird die Pumpe auf Null gesteuert (Q und p = 0).

Die Fördermengendifferenz soll geringfügig, insbesondere möglichst klein sein. Bei Versuchen hat es sich gezeigt, daß bei einer Differenz von unter etwa 0,1 %, vorzugsweise etwa 0,02 bis 0,05 %, eine gute Funktion erzielbar ist.

Es ist zwar ansich aus der DE-OS 18 01 137 bekannt, bei einer Steuervorrichtung für ein hydrostatisches Getriebe die Fördermenge der Pumpe und die jedem Verbraucher zuzuführende Teil-Fördermenge in Abhängigkeit von den Verbrauchern zugeordneten, deren Volumenströme einstellenden Weggebern zu steuern, jedoch erfolgt dabei keine Drucksteuerung. Eine Druckwaage ist nicht vorhanden. Dieser Stand der Technik unterscheidet sich von der Erfindung sowohl hinsichtlich Problemstellung als auch Lösung wesentlich.

Die in den Ansprüchen 2 bis 7 enthaltenen Merkmale enthalten steuerungstechnische Details, die bei Gewährleistung einer präzisen Steuerung einfache und zweckmäßige Ausgestaltungen bzw. Anordnungen gewährleisten. Die Ansprüche 2 und 3 beziehen sich dabei auf die Steuerung der Pumpe, während die Ansprüche 4 bis 6 sich auf die Steuerung des jeweiligen Verbrauchervolumenstromes beziehen, wobei eine elektrische bzw. elektronische Steuereinrichtung vorgesehen ist, die die erfindungsgemäße Verringerung der Steuergröße in einfacher und raumsparender Weise vorgeben kann.

Es ist im Rahmen der Erfindung gemäß Anspruch 7 auch möglich, beim Vorhandensein eines Verbrennungsmotors (Dieselmotors) als Antriebsmotor für die Pumpe die Grenzlastregelung in die Steuerung einzubeziehen.

Dabei ist es auch möglich, eine Leistungsregelung in die Steuerung einzubeziehen.

Nachfolgend wird die Erfindung anhand in vereinfachten Zeichnungen dargestellten bevorzugten Ausführungsbeispielen näher erläutert. Es zeigt

Fig. 1     eine erfindungsgemäß ausgestaltete Steuervorrichtung für ein hydrostatisches Getriebe für drei Verbraucher;

Fig. 2     eine schaubildliche Darstellung und

Fig. 3     eine erfindungsgemäß ausgestaltete Steuervorrichtung als zweites Ausführungsbeispiel.

Von dem in der Zeichnung allgemein mit 1 bezeichneten hydrostatischen Getriebe sind lediglich die Pumpe 2 und ein Teil des offenen Kreislaufs dargestellt, nämlich die Hauptleitung 3 und die Rücklaufleitung 4, wobei die Verbraucher aus Vereinfachungsgründen nicht dargestellt sind. Jedem Verbraucher ist ein Hauptleitungsabschnitt 5 und ein Rücklaufleitungsabschnitt 6 zugeordnet, in die jeweils ein Steuerventil 7 in Form eines Proportional-Wegeventils 8 eingesetzt ist. Es handelt sich jeweils um ein 5/3-Wegeventil mit einer mittleren Sperrstellung und seitlichen Wechselstellungen für Funktionsumkehr des zugehörigen Verbrauchers falls letzteres erforderlich ist.

Bei der Pumpe 2 handelt es sich um eine solche mit verstellbarer Fördermenge, die durch eine hydraulische Verstellvorrichtung 9 einstellbar ist, die durch eine hydraulische Leitung 11 mit der Hauptleitung 3 der Pumpe 2 verbunden und somit durch den Förderdruck der Pumpe 2 verstellbar ist. Die Verstellvorrichtung 9 umfaßt einen hydraulischen Zylinder 12, dessen Stellkolben 13 hydraulisch gegen eine Feder 14 verstellbar ist und am Fördermengeneinstellglied der Pumpe 2 angreift. Es handelt sich um eine Drucksteuerung, d.h., mit steigendem Druck in der Hauptleitung 3 wird die Pumpe 2 automatisch auf eine entsprechend größere Fördermenge eingestellt.

In jedem zum zugehörigen Steuerventil 7 führenden Hauptleitungsabschnitt 5 ist ein Stromventil in Form einer sogenannten Druckwaage 15 angeordnet, wobei zwischen der Druckwaage 15 und dem Steuerventil 7 in Strömungsrichtung zunächst noch ein Rückschlagventil 16 und eine verstellbare Drossel 17, die im Steuerventil 7 integriert ist, vorgesehen sind. Die Druckwaage 15 ist einerseits vom im jeweiligen Hauptleitungsabschnitt 5 herrschenden Förderdruck und aufgrund einer Verbindungsleitung 18 mit dem hinter dem Steuerventil 7 herrschenden Lastdruck beaufschlagt. Sie ist so eingerichtet, daß zwischen dem Lastdruck und dem Pumpendruck eine Druckdifferenz von etwa 20 bar bei einem Lastdruck von bis zu 400 bar aufrecht erhalten wird.

Der Verstellvorrichtung 9 ist ein allgemein mit 19 bezeichnetes Stellglied zugeordnet, das in Abhängigkeit von der Verstellbewegung der Steuerventile 7 gesteuert ist und somit in Abhängigkeit von der Einstellung der Steuerventile 7 auf die Fördermengenbemessung einwirkt. Das Stellglied 19 wird durch ein elektromagnetisches Proportionalventil 21 gebildet, das in der die Hauptleitung 3 mit einer Arbeitskammer 22 des Zylinders 12 verbindenden Leitung 11 angeordnet ist und den Durchgang zu dieser Arbeitskammer 22 bzw. einem Rücklauf 23 steuert. Beim vorliegenden Ausführungsbeispiel ist auch die andere Arbeitskammer 24 des Zylinders 12 durch eine Leitung 25 mit dem Förderdruck beaufschlagbar. Die Feder 14 ist in der Arbeitskammer 24 angeordnet, die durch die Kolbenringkammer des Zylinders 12 gebildet ist.

In einem zur hydraulischen Leitung 11 parallelen Leitungsabschnitt 26 ist dem Stellglied 19 ein Druckbegrenzungsventil 27 zwecks Steuerung der Steuervorrichtung im Sinne einer Druckabschneidung vorgeordnet. Mit 28 ist ein Potentiometer bezeichnet.

Wie schon erwähnt, sind die Steuerventile 7 durch elektrohydraulische Proportionalventile gebildet. Zur Steuerung der Steuerventile 7 dient eine Steuerleitung 31 mit zu beiden Seiten jedes Steuerventils 7 führenden Leitungsabschnitten 32, die von einer Hilfspumpe 33 gespeist wird, die von dem auch die Pumpe 2 antreibenden Motor angetrieben werden oder auch einen eigenen Antriebsmotor besitzen kann. Die Steuerleitung 31 ist durch einen Leitungsabschnitt 34 mit der hochdruckführenden Leitung 11 verbunden, wobei zu beiden Seiten der Verbindungsstelle 35 Rückschlagventile 36 zwecks Absicherung vorgesehen sind. Eine vergleichbare Verbindung ist auch durch einen Leitungsabschnitt 29 mit Rückschlagventil 36 zwischen der Steuerleitung 31 und der Rücklaufleitung 4 geschaffen. Der Hilfsdruck gewährleistet somit einen Mindestdruck im Hochdrucksystem und ein Rücklauf.

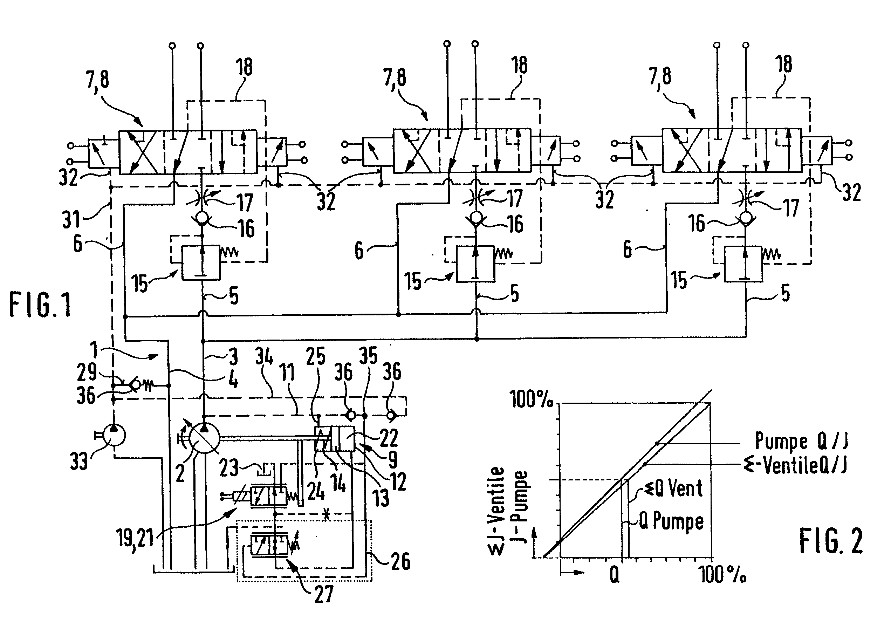

Der Steuervorrichtung ist eine beim Ausführungsbeispiel gemäß Fig. 1 nicht dargestellte elektronische Steuereinrichtung zugeordnet, die durch nicht dargestellte elektrische Leitungen mit den Steuerventilen 7 an deren Anschlüssen und dem Stellglied 19 an dessen Anschluß verbunden ist.

Die Steuerventile 7 sind an ihren Anschlüssen mit ebenfalls nicht dargestellten Stellgliedern verbunden, an denen der Volumenstrom, mit dem jeweils die Verbraucher beaufschlagt werden sollen, eingestellt werden kann. Es kann sich bei solchen Stellgliedern um Potentiometer handeln, an denen die Bedienungsperson die Beaufschlagung der Verbraucher vorgibt. Mittels der elektronischen Steuereinrichtung wird die Bewegung bzw. Einstellung der Steuerventile 7 ermittelt oder auch gesteuert und in Abhängigkeit davon die Bewegung des Stellgliedes 19 gesteuert, so daß eine Abhängigkeit zwischen dem vorgewählten Verbrauchervolumenstrom und der Fördermengeneinstellung der Pumpe 2 besteht. Dabei wird bei der Steuerung des Stellglieds 19 ein Reduzierfaktor berücksichtigt, der bei 0,02 bis 0,05 % liegt, d.h., die Summe der Verbrauchervolumenströme wird mit dem Faktor 0,95 bis 0,98 an der Fördermengeneinstellung der Pumpe 2 eingestellt. Aufgrund dieser Unterversorgung wird eine Öffnung der Eingangsdruckwaage 15 bewirkt, die dem höchst belasteten Verbraucher zugeordnet ist. Hierdurch wird aufgrund einer geringen Unterversorgung der Druckunterschied zwischen dem Lastdruck und dem Förderdruck aufgehoben. Wird die Verbraucherforderung größer als der mögliche Pumpenförderstrom oder greift eine nicht dargestellte Leistungsregelung ein, dann werden alle Verbraucher anteilig zurückgenommen, so daß alle Verbraucher mit reduziertem Förderstrom weiterversorgt werden. Bei Verbrauchsforderung Null wird die Pumpe auf Null ($Q$ und $p = 0$) gesteuert.

Aus der schaubildlichen Darstellung gemäß Fig. 2 sind die Kennlinien der Volumenströme der Pumpe und der Volumenströme im Bereich der Steuerventile 7 zu entnehmen. J bedeutet dabei die Stromstärke des das zugehörige Steuerventil 7 beaufschlagenden elektrischen Stromes, der dem zugehörigen Volumenstrom proportional ist.

Im folgenden werden Vorteile der erfindungsgemäßen Ausgestaltung beschrieben:

Einfacher Aufbau. Das heißt, es läßt sich eine einfache elektrisch-proportionale Verstellung oder eine Hochdruck-Verstellung mit Druckabschneidung einsetzen.

Keine Probleme mit den anlagenbezogenen Schwingungen, da die Pumpe im wesentlichen nur gesteuert wird.

Vermeidung des Leistungsverlustes am Verbraucher mit dem höchsten Arbeitsdruck.

Keine Verbraucherdruckmeldeleitungen sind erforderlich, da sich der Verbraucher mit der höchsten Belastung automatisch der Pumpe mitteilt.

Standby-Druck kann in den 0-Bereich abgesenkt werden, weil die Pumpe elektrisch angesteuert wird.

Kein Problem der Erwärmung der Pumpe im Standby-Bereich.

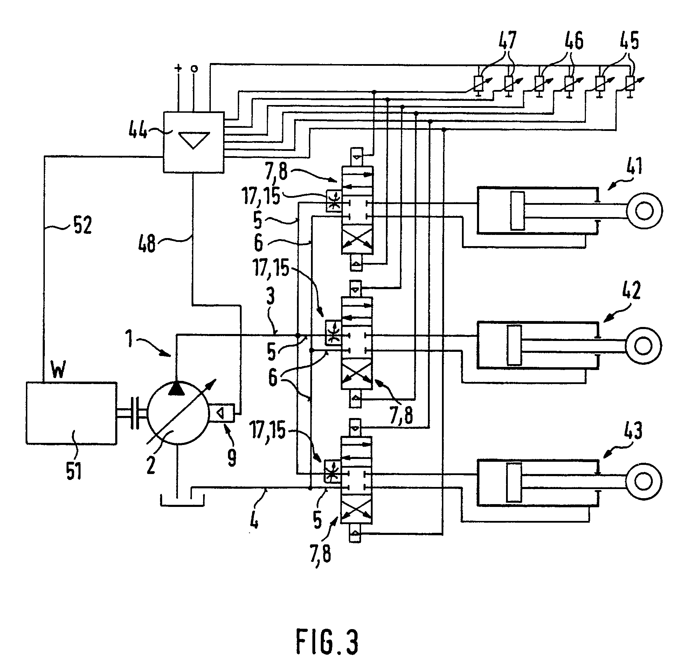

Fig. 3 zeigt ein prinzipiell dem vorbeschriebenen entsprechendes Ausführungsbeispiel, bei dem die drei Verbraucher in Form von Zylinder-Kolben-Einheiten und die elektronische Steuereinrichtung angedeutet und mit 41 bis 43 bzw. 44 bezeichnet sind. Entsprechende Teile sind mit gleichen Bezugszeichen versehen. Zum Vorgeben der jeweiligen Verbrauchervolumenströme dienen Einstellglieder, die durch Potentiometer 45 bis 47 gebildet sein können und durch elektrische Leitungen mit den Steuerventilen 7 bzw. 8 und mit der elektronischen Steuereinrichtung 44 verbunden sind, die die Verstelleinrichtung 9 mittels der elektrischen Leitung 48 steuert. Die Pumpe 2 wird durch einen Dieselmotor 51 angetrieben. In der elektronischen Steuereinrichtung 44 kann auch die Grenzlastregelung dieses Antriebes als Leistungsregelung einbezogen werden. Hierzu wird die Antriebsdrehzahl z.B. an der Klemme W des Dieselmotors bzw. einem Drehzahlmesser abgenommen, mittels der elektrischen Leitung 52 der Steuereinrichtung 44 zugeführt und von dieser den Steuerventilen 7, 8 durch die elektrischen Leitungen mitgeteilt, ohne die Proportionalität der Einstellung der Steuerventile 7, 8 untereinander entsprechend der individuellen Einstellung der Potentiometer 45 bis 47 (Geber bzw. Einstellglieder) zu verändern.

**Patentansprüche**

1. Steuervorrichtung für ein hydrostatisches Getriebe für wengistens zwei Verbraucher, das eine Pumpe verstellbarer Fördermenge aufweist, deren Verstellvorrichtung in Abhängigkeit von der Fördermenge und/oder vom Förderdruck beaufschlagbar ist, wobei jedem Verbraucher in der ihn versorgenden hydraulischen Leitung ein Steuerventil zugeordnet ist und die Förderstromzumessung für jeden Verbraucher mittels einer Druckwaage in Abhängigkeit von der am Steuerventil eingestellten Vorgabe erfolgt, dadurch gekennzeichnet, daß die Verstellvorrichtung die Pumpe (2) jeweils auf eine Fördermenge einstellt, die geringer ist als es der Summe der tatsächlich momentan angeforderten Verbrauchervolumenströme entspricht.

2. Steuervorrichtung nach Anspruch 1, dadurch gekennzeichnet, daß der Verstellvorrichtung (9) ein Stellglied (19) zugeordnet ist, das in Abhängigkeit von der Einstellung des oder der Steuerventile (7) gesteuert ist.

3. Steuervorrichtung nach Anspruch 1 oder 2, dadurch gekennzeichnet, daß das Stellglied (19) ein elektrohydraulisches Proportionalventil (21) ist.

4. Steuervorrichtung nach einem der Ansprüche 1 bis 3, dadurch gekennzeichnet, daß die Steuerventile (7) elektromagnetische Proportionalventile sind.

5. Steuervorrichtung nach einem der Ansprüche 1 bis 4, dadurch gekennzeichnet, daß ihr eine elektronische Steuereinrichtung zugeordnet ist, die mit den Steuerventilen (7) und dem Stellglied - (19) verbunden ist.

6. Steuervorrichtung nach einem der Ansprüche 1 bis 5, dadurch gekennzeichnet, daß die Steuerventile (7) von einem Hilfsdruck beaufschlagbare Vorsteuerventile sind.

7. Steuervorrichtung nach einem der Ansprüche 1 bis 6, wobei die Pumpe (2) durch einen Verbrennungsmotor, insbesondere einen Dieselmotor, angetrieben ist, dadurch gekennzeichnet, daß eine Grenzlastregelung des Antriebes als Leistungsregelung des Antriebes in die Steuervorrichtung einbezogen ist.

**Claims**

1. A control device for a hydrostatic drive for at least two users, comprising a variable displacement pump whose adjusting device can be acted on as a function of the displacement and/or of the delivery pressure, wherein a control valve is associated with each user in its hydraulic supply line and the delivery flow for each user is determined by means of a pressure compensator as a function of the value preset at the control valve, characterised in that the adjusting device always sets the pump (2) at a displacement which is less than that corresponding to the sum of the actual instantaneous volume flows required by the users.

2. A control device according to claim 1, characterised in that the adjusting device (9) has associated with it an adjusting member (19) which is controlled as a function of the setting of the control valve or valves (7).

3. A control device according to claim 1 or claim 2, characterised in that the adjusting member (19) is an electro-hydraulic proportional valve (21)

4. A control device according to any one of claims 1 to 3, characterised in that the control valves (7) are electromagnetic proportional valves.

5. A control device according to any one of claims 1 to 4, characterised in that associated with it is an electronic control device which is connected to the control valves (7) and the adjusting member (19).

6. A control device according to any one of claims 1 to 5, characterised in that the control valves (7) are pilot valves acted on by an auxiliary pressure.

7. A control device according to any one of claims 1 to 6, in which the pump (2) is driven by an internal combustion engine, particularly a diesel engine, characterised in that the maximum load control of the drive is included in the control device as output control of the drive.

## Revendications

1. Dispositif de commande pour une transmission hydrostatique pour au moins deux utilisateurs, comprenant une pompe à débit réglable dont le dispositif de réglage est actionné en fonction du débit de refoulement et/ou de la pression de refoulement, dans lequel une vanne de commande est associée à chaque utilisateur dans sa conduite hydraulique d'alimentation, et dans lequel le dosage du débit fourni à chaque utilisateur a lieu au moyen d'une balance manométrique en fonction de la valeur de consigne sur laquelle est réglée la vanne de commande, **caractérisé** en ce que le dispositif de réglage règle toujours la pompe (2) sur un débit inférieur à la somme des débits volumétriques effectivement requis momentanément par les utilisateurs.

2. Dispositif de commande selon la revendication 1, caractérisé en ce qu'un organe de réglage (19) est associé au dispositif de commande (9), cet organe étant commandé en fonction du réglage de la vanne ou des vannes de commande (7).

3. Dispositif de réglage selon la revendication 1 ou 2, caractérisé en ce que l'organe de réglage (19) est une vanne proportionnelle électrohydraulique (21).

4. Dispositif de commande selon une des revendications 1 à 3, caractérisé en ce que les vannes de commande (7) sont des vannes proportionnelles électromagnétiques.

5. Dispositif de commande selon une des revendications 1 à 4, caractérisé en ce qu'il lui est associé un dispositif électronique de commande qui est relié aux vannes de commande (7) et à l'organe de réglage (19).

6. Dispositif de commande selon une des revendications 1 à 5, caractérisé en ce que les vannes de commande (7) sont des vannes pilotes commandées par une pression auxiliaire.

7. Dispositif de commande selon une des revendications 1 à 6, dans lequel la pompe (2) est entraînée par un moteur à combustion, en particulier par un moteur diesel, caractérisé en ce qu'on fait intervenir une régulation de charge limite de la transmission comme régulation de la puissance de la transmission dans le dispositif de commande.

FIG.1

7,8  18

32

31
6

17
16

15  5

7,8  18

32

17
16

15  5

7,8  18

32

16  17

15  5

1
29
36

3  34  25  36  35  36
4  11

33

2  23  24  14  9  12
13

19,21

26

27

FIG. 2

100%

∑J-Ventile
J-Pumpe

100%

∑Q Vent
Q Pumpe

Pumpe Q/J
∑-VentileQ/J

Q  100%

FIG. 2

EP 0 275 969 B1

FIG.3